# EUROPEAN PATENT APPLICATION

(11) **EP 3 754 571 A1**
(43) Date of publication of application: **23.12.2020**
(21) Application number: 19750533.2
(22) Date of filing: 29.01.2019
(51) Int. Cl.: G06Q 10/06

(54) **RISK CONTROL RULE GENERATION METHOD AND APPARATUS**

(30) Priority: 12.02.2018 CN 201810144812
(71) Applicant: ALIBABA GROUP HOLDING LIMITED, George Town, Grand Cayman (KY)
(72) Inventor: ZHANG, Tianyi, Hangzhou, Zhejiang 311121 (CN); SONG, Bowen, Hangzhou, Zhejiang 311121 (CN)
(74) Representative: Bryn-Jacobsen, Caelia
(86) International application number: PCT/CN2019/073565
(87) International publication number: WO 2019/154162

(57) **Abstract**

The present application has disclosed a method and device for generating risk control rules, the method comprising: aligning a source domain and a target domain in terms of data structures, to obtain a sample data set, wherein the sample data set comprises the source domain sample data and target domain sample data; carrying out multiple iterations with respect to the sample data set based on a preset convergence threshold, in order to obtain a weight of each sample data in the sample data set; further, determining characteristic parameter values in the preset risk control rules generation conditions according to the weight of each sample data in the sample data set; and generating risk control rules according to the preset risk control rules generation conditions and the characteristic parameter values in the preset risk control rules generation conditions, so as to be able to utilize historical data accumulated in mature service scenarios corresponding to the source domain to quickly generate risk control rules for new service scenarios corresponding to the target domain and effectively increase the efficiency of generating risk control rules.

## Description

### CROSS-REFERENCE TO RELATED APPLICATIONS

The present patent application claims priority to Chinese Patent with application No. 201810144812.1, filed on Feb. 12, 2018 and entitled "METHOD AND DEVICE FOR GENERATING RISK CONTROL RULES," the disclosure of which is incorporated herein by reference in its entirety.

### TECHNICAL FIELD

The present application relates to the field of risk control, and in particular, to a method and device for generating risk control rules.

### BACKGROUND

In economic fields such as finance and enterprise operation and management, effective risk control measures are necessary tools for preventing and fighting financial crimes. Along with the development of internet technologies, various types of internet-based economic activities have quickly flourished, including service scenarios such as online shopping and online transactions. Therefore, internet risk control has become more and more important. In practical applications, the method for controlling internet risks is through setting up certain risk control rules to determine risky transactions and credible transactions, and the generation of the risk control rules is dependent on a large amount of historical transaction data. When it comes to new service scenarios, as it takes a long time to accumulate transaction data, it is not possible to establish risk control rules for such new scenarios in a timely fashion. Therefore, it is urgently needed to provide a risk control rules generation method with higher efficiency.

### SUMMARY

The present application has provided a method and device for generating risk control rules that can effectively increase the efficiency of generating such risk control rules.

An embodiment of the present application has provided a method for generating risk control rules, comprising:
aligning a source domain and a target domain in terms of data structures, to obtain a sample data set, wherein the sample data set comprises source domain sample data and target domain sample data;
carrying out multiple iterations with respect to the sample data set based on a preset convergence threshold, in order to obtain a weight of each sample data in the sample data set;
determining characteristic parameter values in preset risk control rules generation conditions, according to the weight of each sample data in the sample data set; and
generating risk control rules according to the preset risk control rules generation conditions and the characteristic parameter values in the preset risk control rules generation conditions.

Optionally, aligning a source domain and a target domain in terms of data structures, to obtain a sample data set comprises:
adding variable data with the same variable dimension and/or variable data with the same service logic definition in the source domain and the target domain into the sample data set.

Optionally, carrying out multiple iterations with respect to the sample data set based on the preset convergence threshold, in order to obtain a weight of each sample data in the sample data set comprises:
determining a classification model, based on a predetermined algorithm and the sample data set;
carrying out multiple iterations with respect to the sample data set through decreasing the weight of source domain data that are misclassified and increasing the weight of target domain data that are misclassified, until a classification correction rate of the classification model satisfies the preset convergence value; and
determining a weight of each sample data in the sample data set based on the classification model with the classification correction rate satisfying the preset convergence value.

Optionally, determining characteristic parameter values in preset risk control rules generation conditions according to the weight of each sample data in the sample data set comprises:
determining the characteristic parameter values in the preset risk control rules generation conditions by adopting a weighted decision tree algorithm and according to the weight of each sample data in the sample data set.

Optionally, the variable data are customer relationship management RFM variable data, used for indicating risk similarity of transaction events.

Optionally, the RFM variable data comprises: transaction information variables, network risk variables and user historical behavior variables.

An embodiment of the present application further provides a device for generating risk control rules, comprising:
a set determination unit, for aligning a source domain and a target domain in terms of data structures, to obtain a sample data set, wherein the sample data set comprises source domain sample data and target domain sample data;
a weight determination unit, for carrying out multiple iterations with respect to the sample data set based on a preset convergence threshold, to obtain a weight of each sample data in the sample data set;
a characteristic value determination unit, for determining characteristic parameter values in preset risk control rules generation conditions according to the weight of each sample data in the sample data set; and
a rule generation unit, for generating risk control rules according to the preset risk control rules generation conditions and the characteristic parameter values in the preset risk control rules generation conditions.

Optionally, the set determination unit is specifically used for:
adding variable data with the same variable dimension and/or variable data with the same service logic definition in the source domain and the target domain into the sample data set.

Optionally, the weight determination unit is specifically used for:
determining a classification model, based on a predetermined algorithm and the sample data set;
carrying out multiple iterations with respect to the sample data set by decreasing the weight of source domain sample data that are misclassified and increasing the weight of target domain sample data that are misclassified, until a classification correction rate of the classification model satisfies the preset convergence value; and
determining a weight of each sample data in the sample data set based on the classification model with the classification correction rate satisfying the preset convergence value.

Optionally, the characteristic value determination unit is specifically used for:
determining the characteristic parameter values in the preset risk control rules generation conditions by adopting a weighted decision tree algorithm and according to the weight of each sample data in the sample data set.

Optionally, the variable data are customer relationship management RFM variable data, used for indicating risk similarity of transaction events.

Optionally, the RFM variable data comprises: transaction information variables, network risk variables and user historical behavior variables.

An embodiment of the present application further provides a device for generating risk control rules, comprising:
a memory, used for storing a program;
a processor, for executing the program stored in the memory and specifically executing the following:
   aligning a source domain and a target domain in terms of data structures, to obtain a sample data set, wherein the sample data set comprises source domain sample data and target domain sample data;
   carrying out multiple iterations with respect to the sample data set based on a preset convergence threshold, in order to obtain a weight of each sample data in the sample data set;
   determining characteristic parameter values in preset risk control rules generation conditions according to the weight of each sample data in the sample data set; and
   generating risk control rules according to the preset risk control rules generation conditions and the characteristic parameter values in the preset risk control rules generation conditions.

An embodiment of the present application further provides a computer-readable storage medium, wherein the computer-readable storage medium stores one or more programs and when the one or more programs are executed by an electronic device comprising a plurality of applications, the electronic device is caused to execute the following methods:
aligning a source domain and a target domain in terms of data structures, to obtain a sample data set, wherein the sample data set comprises source domain sample data and target domain sample data;
carrying out multiple iterations with respect to the sample data set based on a preset convergence threshold, to obtain a weight of each sample data in the sample data set;
determining characteristic parameter values in preset risk control rules generation conditions according to the weight of each sample data in the sample data set; and
generating risk control rules according to the preset risk control rules generation conditions and the characteristic parameter values in the preset risk control rules generation conditions.

The above at least one technical solution adopted in embodiments of the present application can achieve the following beneficial effects:
by aligning a source domain and a target domain in terms of data structures, a sample data set comprising the source domain sample data and target domain sample data is obtained; by carrying out multiple iterations with respect to the sample data set based on a preset convergence threshold, a weight of each sample data in the sample data set is obtained; further, characteristic parameter values in the preset risk control rules generation conditions are obtained according to the weight of each sample data in the sample data set; and risk control rules are generated according to the preset risk control rules generation conditions and the characteristic parameter values in the preset risk control rules generation conditions, thus making it possible to use historical data accumulated in mature service scenarios corresponding to the source domain to quickly generate risk control rules for new service scenarios corresponding to the target domain, and effectively increasing the efficiency of generating risk control rules.

### BRIEF DESCRIPTION OF THE DRAWINGS

The appended figures herein are provided to facilitate a better understanding of the present application, which are an integral part of the present application. The schematic embodiments of the present application and the descriptions thereof are used to illustrate the present application, which are not intended to impose undue limit to the present application. In the figures:
Fig. 1 is a schematic diagram of a method for generating risk control rules using current technology;
Fig. 2 is a schematic flowchart of a method for generating risk control rules provided by an embodiment of the present application;
Fig. 3 is a schematic diagram of variable data in a sample data set provided by an embodiment of the present application;
Fig. 4 is a schematic diagram of a determination method for a weight of a data sample provided by an embodiment of the present application;
Fig. 5 is a schematic diagram of a weighted decision tree provided by an embodiment of the present application;
Fig. 6 is a schematic diagram of a structure of an electronic device provided by an embodiment of the present application;
Fig. 7 is a schematic diagram of a structure of a device for generating risk control rules provided by an embodiment of the present application.

### DETAILED DESCRIPTION OF THE EMBODIMENTS

The method of internet risk control is accomplished by setting up certain risk control rules to determine risky transactions and credible transactions. Currently, the risk control rules normally adopt a dual-entity credible pair, i.e., when two entities appear at the same time in the transaction, it is determined that the transaction is credible. For example, with respect to credit cards, there is a very low probability that the original shipping address is stilled being used after a credit card has been stolen; therefore, it can be determined that a transaction with a certain credit card + a certain shipping address is a credible transaction according to historical transaction data. In other words, the credit card + the shipping address is a dual-entity credible pair, and when a transaction appears with such credit card + such address, it is directly determined that the transaction is credible. The commonly used dual-entity credible pairs include: card-device credible, card-IP address credible, account-device credible and so on.

In practical applications, the risk control rules generation conditions are predetermined. For example, the risk control rules are predetermined as: credit card + shipping address, the risk control rules generation conditions may be "the number of times of using the credit card + shipping address exceeds X times, the amount is greater than X Yuan, and no risky transactions for Z days." The characteristic parameter values (X, Y, Z) in the risk control rules generation conditions are determined according to a large amount of historical transaction data; and then the risk control rules, namely "credit card + delivery address," can be generated according to such the risk control rules generation conditions and such characteristic parameter values (X, Y, Z).

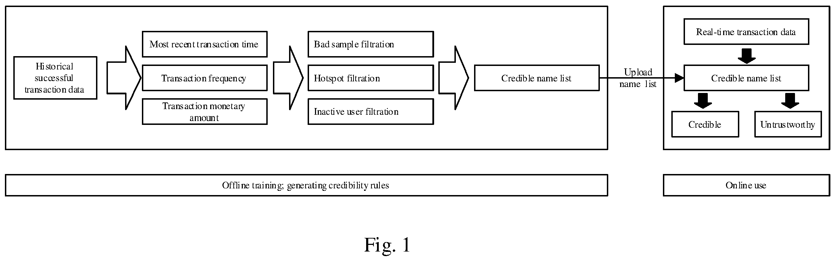

Fig. 1 is a schematic diagram of a method for generating risk control rules using current technologies.

As illustrated in Fig. 1, preset risk control rules are determined based on historical transaction data, i.e., a credible name list. Thus, during a real-time transactions, it is determined as to whether such a real-time transaction complies with such credible name list according to the real-time transaction data; if so, then it is determined that such a real-time transaction is credible; and if not, it is determined that such a real-time transaction is not credible.

However, with respect to new service scenarios, e.g., when developing services in a new market, as there are little amount of historical transaction data, it is not possible to quickly determine characteristic parameter values in the preset risk control rules generation conditions, which causes that risk control rules cannot be quickly generated in new service scenarios.

In order to accomplish the objective of the present application, an embodiment of the present application provides a method and device for generating risk control rules, the method comprising: obtaining a sample data set that includes source domain sample data and target domain sample data by aligning a source domain and a target domain in terms of data structures; carrying out multiple iterations with respect to the sample data set based a preset convergence value, to obtain a weight of each sample data in the sample data set; further, determining characteristic parameter values in the preset risk control rules generation conditions according to the weight of each sample data in the sample data set; and then generating risk control rules according to the preset risk control rules generation conditions and the characteristic parameter values in the preset risk control rules generation conditions, so as to be able to utilize historical data accumulated in mature service scenarios corresponding to the source domain to quickly generate risk control rules for new service scenarios corresponding to the target domain and effectively increase the efficiency for generating risk control rules.

The technical solutions of the present application are clearly and completely described with reference to specific embodiments of the present application and corresponding appended figures. Apparently, the described embodiments are merely a part of, rather than all of the embodiments of the present application. On the basis of the embodiments in the present application, all other embodiments obtained by those of ordinary skill in the art without making creative efforts shall all fall within the protection scope of the present application.

Technical solutions provided by the embodiments of the present application are described below in detail with reference to the accompanying drawings.

### Embodiment 1

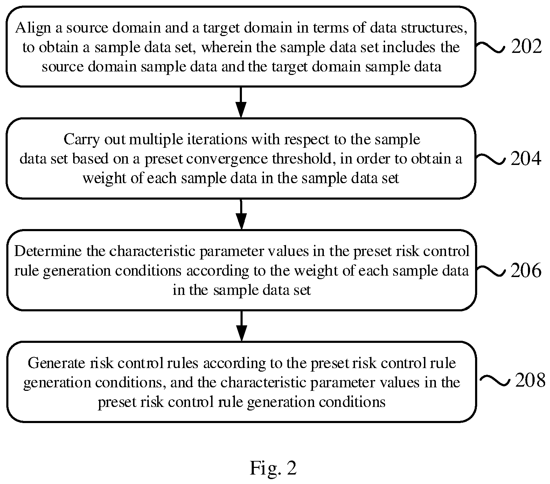

Fig. 2 is a schematic flowchart of a method for generating risk control rules provided by an embodiment of the present application. The above noted method may be illustrated as follows.

Step 202: aligning a source domain and a target domain in terms of data structures, to obtain a sample data set, wherein the sample data set includes the source domain sample data and target domain sample data.

It should be noted that, what is included in the source domain is the first historical transaction data accumulated in mature service scenarios, and what is included in the target domain is the second historical transaction data accumulated in new service scenarios, wherein the magnitude of the data in the first historical transaction data is greater than the magnitude of the data in the second historical transaction data.

The first historical transaction data with a larger data amount in the source domain is used to help the second historical transaction data with a smaller data amount in the target domain, to generate risk control rules for the target domain; and firstly, data structure alignment needs to be carried out for the source domain and target domain.

In an embodiment of the present application, aligning a source domain and a target domain in terms of data structures, to obtain a sample data set, comprising:
adding variable data with the same variable dimension and/or variable data with the same service logic definition in the source domain and the target domain into the sample data set, wherein
the variable data are the customer relationship management RFM variable data, used for indicating similarity in risk of the transaction events.

In the source domain and the target domain, as most of the variable data are customer relationship management RFM (Recency Frequency Monetary) variable data, which are related to transactional behaviors and are defined by service understanding used for indicating the similarity in risk of transaction events, data combination is carried out for the source domain and the target domain; variable data with the same variable dimension and/or variable data with the same service logic definition in the source domain and the target domain are added into the sample data set, wherein such sample data set is used for determining risk control rules for the target domain subsequently.

In an embodiment of the present application, the RFM variable data comprise: transaction information variables, network risk variables, and user historical behavior variables.

It should be noted that, in addition to the above noted transaction information variables, network risk variables, and user historical behavior variables, the RFM variable data may also be the other RFM variables depending on the actual situation, which is not particularly specified herein.

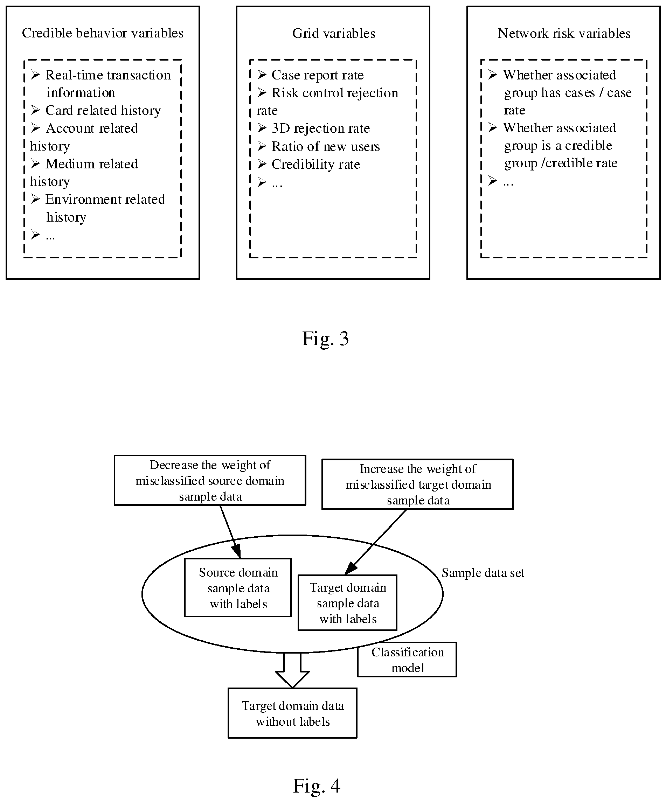

Fig. 3 is a schematic diagram of variable data in a sample data set provided by an embodiment of the present application. As illustrated in Fig. 3, taking credit cards as an example, the variable data in the sample data set may comprise variable data such as real-time transaction information, card related history, account related history and risk control rejection rate, etc.

Step 204: carrying out multiple iterations with respect to the sample data set based on a preset convergence threshold, to obtain a weight of each sample data in the sample data set.

After determining the sample data set, multiple iterations are carried out with respect to the sample data set based on the preset convergence threshold, in order to ultimately obtain the weight of each sample data in the sample data set.

Specifically, carrying out multiple iterations with respect to the sample data set, in order to obtain the weight of each sample data in the sample data set comprises:
determining a classification model based on the preset algorithm and the sample data set;
carrying out multiple iterations with respect to the sample data set by decreasing the weight of the source domain sample data that are misclassified and increasing the weight of the target domain sample data that are misclassified, until the classification correction rate of the classification model satisfies the preset convergence value;
determining the weight of each sample data in the sample data set based on the classification model with the classification correction rate satisfying the preset convergence value, wherein
the preset algorithm is a TrAdaBoost algorithm corresponding to the transfer-learning based on samples.

Fig. 4 is a schematic diagram of a determination method for a weight of data sample provided by an embodiment of the present application.

As illustrated in Fig. 4, the source domain sample data and target domain sample data included in the data sample set are both sample data with labels; classification training is carried out with respect to the source domain sample data and target domain sample data with labels based on the TrAdaBoost algorithm, to determine a classification model and further, classification is carried out with respect to the data without labels in the target domain, thereby determining the classification accuracy of the classification model, wherein
such classification accuracy is related to whether the source domain data and the target domain data are misclassified. During classification training, for misclassified source domain sample data, it means that such source domain sample data are very different from the target domain sample data and therefore, weights of the source domain sample data that are misclassified need to be decreased, so as to reduce the weights of such source domain sample data that are misclassified. For the misclassified target domain sample data, it means that such target domain sample data are sample data that are difficult to classify; therefore, the weight of the target domain sample data that are misclassified need to be increased, so that, during the next classification training, the probability of such target domain sample data being misclassified can be reduced.

Multiple iterations are carried out with respect to the sample data set by decreasing the weight of the source domain sample data that are misclassified and increasing the weight of the target domain sample data that are misclassified, during each classification training process, until the classification correction rate of the classification model satisfies the preset convergence value, in order to obtain a relatively optimized classification model.

The weight of each sample data in the sample data set is determined based on the obtained classification model with the classification correction rate satisfying the preset convergence value, i.e., determining the obtained weight of each sample data in the sample data set of the classification model with the classification correction rate satisfying the preset convergence value as the final weight of each sample data.

Step 206, determining characteristic parameter values in the preset risk control rules generation conditions according to the weight of each sample data in the sample data set.

Specifically, determining characteristic parameter values in the preset risk control rules generation conditions according to the weight of each sample data in the sample data set comprises:
determining the characteristic parameter values in the preset risk control rules generation conditions by adopting a weighted decision tree algorithm, according to the weight of each sample data in the sample data set;
predefining a transaction risk rate, thereby facilitating determining the characteristic parameter values in the preset risk control rules generation conditions based on the weighted decision tree algorithm and within a preset range of transaction risk rate, according to the weight of each sample data in the sample data set.

With respect to credit cards, assuming that the preset transaction risk rate is that the risky transaction concentration is less than 1 in 10,000, i.e., the presence of risky transactions in 10,000 transactions is less than one case. Further, according to the weight of each sample data in the sample data set, the branch parameter and branch threshold while traversing the weighted decision tree are determined, until the characteristic parameter values that satisfy such risky transaction concentration are determined.

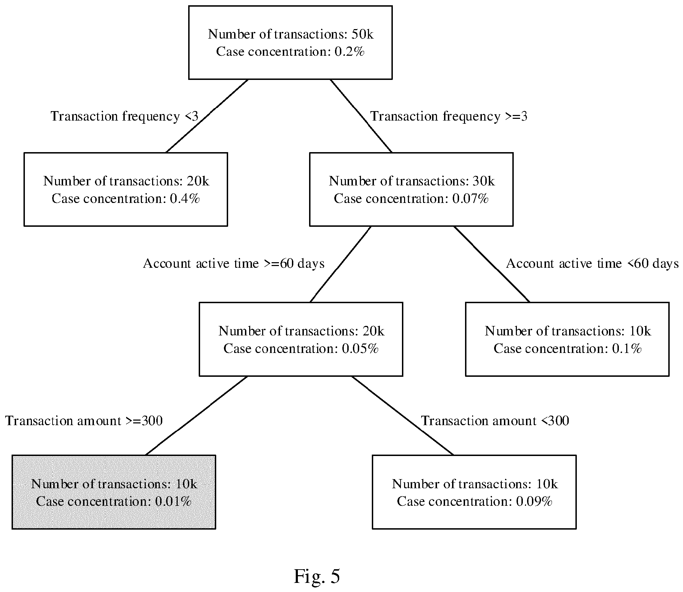

Fig. 5 is a schematic diagram of a weighted decision tree provided by an embodiment of the present application.

As illustrated in Fig. 5, in the weighted decision tree, the branch parameter of the first layer is determined as a transaction frequency and the branch threshold is determined as a transaction frequency 3, according to the weight of each sample data in the sample data set; the branch parameter of the second layer is an active period of the account and the branch threshold is an active period of the account being 60 days; the branch parameter of the third layer is a total amount of a transaction and the branch threshold is a total amount of the transaction being 300 Yuan, thereby ultimately obtaining the characteristic parameter values that satisfy the risky transaction concentration of less than 1 in 10,000: the number of transactions is 10k.

Based on the weight of each sample data in the sample data set, it is possible to use the historical data accumulated in mature service scenarios corresponding to the source domain more effectively to quickly determine the characteristic parameter values in the preset risk control rules generation conditions, effectively increasing the accuracy of the characteristic parameter values and achieving optimization.

Step 208, generating risk control rules according to the preset risk control rules generation conditions and the characteristic parameter values in the preset risk control rules generation conditions.

After determining the characteristic parameter values in the preset risk control rules generation conditions, the risk control rules for the target domain may be generated.

For example, the preset risk control rules generation conditions are "the number of times of using this credit card + shipping address exceeding X times, the amount being greater than Y Yuan, and no risky transactions for Z days." It can be determined that the characteristic parameter values (X, Y, Z) in the preset risk control rules generation conditions are (3, 300, 60) based on the aforementioned Steps 202-204; then, the risk control rules can be determined when the historical transaction data meets "the number of times of using this credit card + shipping address exceeds 3 times, the amount is greater than 300 Yuan, and there is no risky transaction for over 60 days", with the dual-entity credible pair being: credit card + shipping address.

In the technical solution as disclosed in an embodiment of the present application, a sample data set that includes the source domain sample data and the target domain sample data is obtained by aligning the source domain and the target domain with respect to the data structures; multiple iterations are carried out with respect to the sample data set based on a preset convergence value, to obtain the weight of each sample data in the sample data set and further, the characteristic parameter values in the preset risk control rules generation conditions are determined according to the weight of each sample data in the sample data set, and the risk control rules are generated according to the preset risk control rules generation conditions and the characteristic parameter values in the preset risk control rules generation conditions, so as to be able to utilize historical data accumulated in mature service scenarios corresponding to the source domain to quickly generate risk control rules for new service scenarios corresponding to the target domain, to effectively increase the efficiency of generating risk control rules.

### Embodiment 2

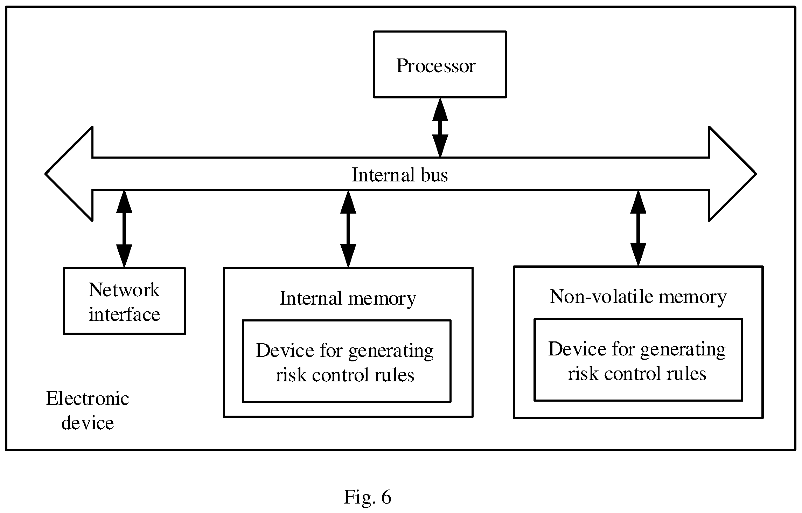

Fig. 6 is a schematic diagram of a structure of an electronic device provided by an embodiment of the present application. As shown in Fig. 6, at a hardware level, the electronic device includes a processor and optionally the electronic device further includes an internal bus, a network interface and a memory. The memory may include an internal memory, such as a high-speed Random-Access Memory (RAM) and may further include a non-volatile memory, such as at least one magnetic disk memory. Certainly, the electronic device may further include hardware required by other services.

The processor, the network interface and the memory can be interconnected by the internal bus. The internal bus may be an Industry Standard Architecture (ISA) bus, a Peripheral Component Interconnection (PCI) bus, or an Extended Industry Standard Architecture (EISA) bus and so on. The bus can be divided into an address bus, a data bus, a control bus, etc. For ease of illustration, only one bidirectional arrow is used as a representation in FIG. 6. However, it is not indicated that only one bus or one bus type is present.

The memory is used for storing a program. Specifically, the program may include program code including computer operation instructions. The memory can include the internal memory and the non-volatile memory and provide instructions and data to the processor.

The processor reads a corresponding computer program from the non-volatile memory to the internal memory, runs the computer program and forms a device for generating risk control rules at a logical level. The processor executes the program stored in the memory and is specifically used for executing the following operations:
aligning a source domain and a target domain in terms of data structures, to obtain a sample data set, wherein the sample data set comprises the source domain sample data and target domain sample data
carrying out multiple iterations with respect to the sample data set based on a preset convergence threshold, in order to obtain a weight of each sample data in the sample data set;
determining the characteristic parameter values in the preset risk control rules generation conditions according to the weight of each sample data in the sample data set;
generating risk control rules according to the preset risk control rules generation conditions and the characteristic parameter values in the preset risk control rules generation conditions.

The aforementioned methods as executed in Embodiment 1 of the present application may be applied to a processor, or may be implemented by the processor. The processor may be an integrated circuit chip and has a signal processing capability. In an implementation process, steps of the aforementioned methods can be implemented by a hardware integrated logic circuit in the processor or by instructions in the form of software. The processor can be a general-purpose processor, including a Central Processing Unit (CPU), a Network Processor (NP), etc.; or, the processor can be a Digital Signal Processor (DSP), an Application Specific Integrated Circuit (ASIC), a Field-Programmable Gate Array (FPGA), or another programmable logic device, a discrete gate or a transistor logic device, or a discrete hardware assembly. The methods, the steps and logical block diagrams disclosed in the embodiments of the present application can be implemented or executed. The general-purpose processor may be a microprocessor, or the processor may be any conventional processor or the like. The steps of the methods disclosed with reference to the embodiments of the present application may be directly executed and completed by a hardware decoding processor, or may be executed and completed by a combination of hardware and software modules in a decoding processor. The software module may be located in a mature storage medium in the art, such as a random-access memory, a flash memory, a read-only memory, a programmable read-only memory, an electrically erasable programmable memory, a register, or the like. The storage medium is located in the memory. The processor reads information in the memory and completes the steps in the aforementioned methods in conjunction with hardware of the processor.

The electronic device can also execute the method as implemented in Fig. 2 to realize the functions of the aforementioned Embodiment 1, and the embodiment of the present application is not repeated herein.

An embodiment of the present application further provides a computer-readable storage medium, wherein the computer-readable storage medium stores one or more programs and such one or more programs include instructions and when the instructions are executed by an electronic device comprising a plurality of applications, the electronic device is caused to execute the method for generating risk control rules as shown in Fig. 2, and the instructions are specifically used for executing the following operations:
aligning a source domain and a target domain in terms of data structures, to obtain a sample data set, wherein the sample data set comprises the source domain sample data and target domain sample data;
carrying out multiple iterations with respect to the sample data set based on a preset convergence threshold, in order to obtain a weight of each sample data in the sample data set;
determining characteristic parameter values in the preset risk control rules generation conditions according to the weight of each sample data in the sample data set;
generating risk control rules according to the preset risk control rules generation conditions and the characteristic parameter values in the preset risk control rules generation conditions.

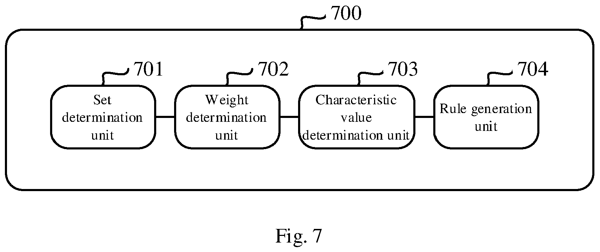

Fig. 7 is a schematic diagram of a structure of a device for generating risk control rules provided by an embodiment of the present application. As shown in Fig. 7, device 700 comprises:
a set determination unit 701, for aligning a source domain and a target domain in terms of data structures, to obtain a sample data set, wherein the sample data set includes the source domain sample data and the target domain sample data;
a weight determination unit 702, for carrying out multiple iterations with respect to sample data set based on a preset convergence threshold, in order to obtain the weight of each sample data in the sample data set;
a characteristic value determination unit 703, for determining characteristic parameter values in the preset risk control rules generation conditions according to the weight of each sample data in the sample data set;
a rule generation unit 704, for generating risk control rules according to the preset risk control rules generation conditions and the characteristic parameter values in the preset risk control rules generation conditions.

Optionally, the set determination unit 701 is specifically used for:
adding variable data with the same variable dimension and/or variable data with the same service logic definition in the source domain and the target domain into the sample data set.

Optionally, the weight determination unit 702 is specifically used for:
determining a classification model based on a preset algorithm and sample data set;
carrying out multiple iterations with respect to the sample data set by decreasing the weight of the source domain sample data that are misclassified and increasing the weight of the target domain sample data that are misclassified, until the classification correction rate of the classification model satisfies the preset convergence value;
determining the weight of each sample data in the sample data set based on the classification model with the classification correction rate satisfying the preset convergence value.

Optionally, the characteristic value determination unit 703 is specifically used for:
determining characteristic parameter values in the preset risk control rules generation conditions by adopting a weighted decision tree algorithm, according to the weight of each sample data in the sample data set;
Optionally, the variable data are the customer relationship management RFM variable data, used for indicating the similarity in risk of the transaction events.

Optionally, the RFM variable data comprise: transaction information variables, network risk variables, and user historical behavior variables.

According to the device for generating risk control rules, the set determination unit aligns the source domain and the target domain in terms of data structures, to obtain a sample data set, wherein the sample data set includes the source domain sample data and target domain sample data; the weight determination unit carries out multiple iterations with respect to the sample data set based on a preset convergence threshold, in order to obtain the weight of each sample data in the sample data set; the characteristic value determination unit determines the characteristic parameter values in the preset risk control rules generation conditions according to the weight of each sample data in the sample data set; and the rules generation unit generates risk control rules according to the preset risk control rules generation conditions and the characteristic parameter values in the preset risk control rules generation conditions, thus making it possible to use historical data accumulated in mature service scenarios corresponding to the source domain to quickly generate the risk control rules for new service scenarios corresponding to the target domain and effectively increase the efficiency of generating the risk control rules.

In the 1990s, whether a technical improvement is a hardware improvement (for example, an improvement on a circuit structure such as a diode, a transistor, or a switch) or a software improvement (an improvement on a method procedure) can be differentiated clearly. However, along with the development of technologies, many improvements on method procedures nowadays can be regarded as direct improvements on hardware circuit structures. Almost all the designers program an improved method procedure into a hardware circuit to obtain a corresponding hardware circuit structure. Therefore, it cannot be said that an improvement on a method procedure cannot be implemented by a hardware entity module. For example, a programmable logic device (PLD) (for example, a field programmable gate array (FPGA)) is such an integrated circuit and a logical function of the PLD is determined by a user through device programming. The designers may program by themselves to "integrate" a digital system with a PLD and there is no need to ask a chip manufacturer to design and manufacture an application specific integrated circuit chip. Furthermore, instead of manually manufacturing an integrated circuit chip, such programming is often implemented by "logic compiler" software, which is similar to a software compiler used in program development and writing. Original code before compiling also needs to be written in a particular programming language, which is referred to as a hardware description language (HDL). There is not just one, but many types of HDLs, for example, ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM and RHDL (Ruby Hardware Description Language), among which VHDL (Very-High-Speed Integrated Circuit Hardware Description Language) and Verilog2 are most commonly used nowadays. Those skilled in the art should also understand that a hardware circuit for implementing a logic method procedure may be easily obtained only by slightly logically programming the method procedure using the above several hardware description languages and programming the method procedure into an integrated circuit.

A controller may be implemented in any suitable manner. For example, the controller may be in the form of a microprocessor or processor and a computer-readable medium that stores computer-readable program code (for example, software or firmware) executable by the (micro)processor, logic gates, switches, an application specific integrated circuit (ASIC), a programmable logic controller and an embedded microcontroller. The examples of the controller include, but are not limited to the following microcontrollers: ARC 625D, Atmel AT91SAM, Microchip PIC18F26K20 and Silicone Labs C8051F320. The memory controller may also be implemented as part of the control logic of the memory. Those skilled in the art also know that, in addition to implementing a controller by pure computer-readable program code, with a logic programming of method or steps, the controller may implement the same function in the form of a logic gate, a switch, an application specific integrated circuit, a programmable logic controller, an embedded microcontroller, or the like. Therefore, such a controller may be regarded as a hardware component and an apparatus included therein for implementing various functions may be regarded as an internal structure of the hardware component. Or, the apparatus for implementing various functions can even be regarded as both a software module for implementing a method and a structure in a hardware component.

The system, device, module, or unit illustrated in the aforementioned embodiments may be specifically implemented by a computer chip or an entity, or a product having a certain function. Atypical implementation device is a computer. Specifically, the computer may be, for example, a personal computer, a laptop computer, a cell phone, a camera phone, a smart phone, a personal digital assistant, a media player, a navigation device, an email device, a game console, a tablet computer, a wearable device, or a combination of any of these devices.

For the sake of convenient description, the above device is functionally divided into various units which are separately described. Certainly, when implementing the present application, the functions of various units may be implemented in one or a plurality of instances of software and/or hardware.

Those skilled in the art should understand that the embodiments of the present specification may be provided as a method, a system, or a computer program product. Therefore, the present specification may take the form of hardware only implementations, software only implementations, or implementations with a combination of software and hardware. Moreover, the present specification may take the form of a computer program product which is embodied on one or more computer-usable storage media (including, but not limited to, a magnetic disk storage, a CD-ROM, an optical storage and so forth) having computer-usable program code included therein.

The present specification is described with reference to the flowcharts and/or block diagrams of the method, the device (system) and the computer program product according to the embodiments of the present specification. It should be understood that each flow and/or block in the flowcharts and/or block diagrams and a combination of the flows and/or blocks in the flowcharts and/or block diagrams may be implemented by computer program instructions. These computer program instructions may be provided to a processor of a general-purpose computer, a special-purpose computer, an embedded processor, or any other programmable data processing device to produce a machine, so that instructions executed by the processor of the computer or other programmable data processing device generate an apparatus for implementing a specified function in one or a plurality of procedures in the flowcharts and/or one or a plurality of blocks in the block diagrams.

These computer program instructions may also be stored in a computer readable memory capable of directing a computer or other programmable data processing device in a particular manner, such that instructions stored in the computer-readable memory produce a manufacturing product that includes an instruction device that implements the functions specified in one or more processes in a flowchart and/or one or more blocks in a block diagram.

These computer program instructions may also be loaded onto a computer or other programmable data processing device such that a series of operating steps are performed on the computer or other programmable device to produce computer-implemented processing, so that instructions executed on the computer or other programmable device provide steps for implementing the functions specified in one or more processes in a flowchart and/or one or more blocks in a block diagram.

In a typical configuration, the computing device includes one or a plurality of processors (CPUs), input/output interfaces, network interfaces and memories.

The memory may include a computer-readable medium in the form of a non-permanent memory, a random-access memory (RAM) and/or a non-volatile memory or the like, such as a read-only memory (ROM) or a flash memory (flash RAM). The memory is an example of a computer-readable medium.

The computer-readable medium includes permanent and non-permanent, movable and non-movable media that can achieve information storage by means of any methods or techniques. The information may be computer-readable instructions, data structures, modules of programs or other data. Examples of a storage medium of a computer include, but are not limited to, a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium and can be used to store information accessible by a computing device. According to the definitions herein, the computer-readable medium does not include transitory computer-readable media (transitory media), such as a modulated data signal and a carrier wave.

It is also important to note that the terms "including", "comprising" or any other variant thereof are intended to cover non-exclusive inclusion, such that processes, methods, goods or devices, including a series of elements, include not only those elements but also other elements not explicitly listed, or also include elements inherent to such processes, methods, goods or equipment. In the absence of more restrictions, the element defined by the statement "including one ..." does not exclude other identical elements in the process, method, commodity or equipment that includes the element.

The present application may be described in a general context of computer-executable instructions executed by a computer, such as a program module. Typically, program modules include routines, programs, objects, components, data structures and the like that perform specific tasks or implement specific abstract data types. The present application may also be implemented in distributed computing environments. In the distributed computing environments, tasks are executed by remote processing devices that are connected through a communication network. In a distributed computing environment, program modules can be located in local and remote computer storage media, including storage devices.

Each embodiment of the present application is described in a progressive manner and the same or similar sections between various embodiments are described with reference to each other, each of which is focused on the differences with other embodiments. Especially, the system embodiment is described relatively briefly because it is substantially similar to the method embodiments and for related parts, reference may be made to the method embodiments.

The above descriptions are merely the embodiments of the present application and are not intended to limit the present application. For those skilled in the art, the present application may have various alterations and changes. Any modifications, equivalent substitutions, improvements and the like made within the spirit and principle of the present application shall fall within the scope of the claims of the present application.

## Claims

1. A method for generating risk control rules, comprising:
aligning a source domain and a target domain in terms of data structures, to obtain a sample data set, wherein the sample data set comprises source domain sample data and target domain sample data;
carrying out multiple iterations with respect to the sample data set based on a preset convergence threshold, in order to obtain a weight of each sample data in the sample data set;
determining characteristic parameter values in preset risk control rules generation conditions according to the weight of each sample data in the sample data set; and
generating risk control rules according to the preset risk control rules generation conditions and the characteristic parameter values in the preset risk control rules generation condition.

2. The method according to Claim 1, wherein aligning a source domain and a target domain in terms of data structures, to obtain a sample data set comprises:
adding variable data with the same variable dimension and/or variable data with the same service logic definition in the source domain and the target domain into the sample data set.

3. The method according to Claim 2, wherein carrying out multiple iterations with respect to the sample data set based on the preset convergence threshold, in order to obtain a weight of each sample data in the sample data set comprises:
determining a classification model, based on a predetermined algorithm and the sample data set;
carrying out multiple iterations with respect to the sample data set by decreasing the weight of source domain sample data that are misclassified and increasing the weight of target domain sample data that are misclassified, until a classification correction rate of the classification model satisfies the preset convergence value; and
determining a weight of each sample data in the sample data set based on the classification model with the classification correction rate satisfying the preset convergence value.

4. The method according to Claim 3, wherein determining characteristic parameter values in preset risk control rules generation conditions according to the weight of each sample data in the sample data set comprises:
determining the characteristic parameter values in the preset risk control rules generation conditions by adopting a weighted decision tree algorithm and according to the weight of each sample data in the sample data set.

5. The method according to Claim 2, wherein the variable data are customer relationship management RFM variable data, used for indicating similarity in risk of transaction events.

6. The method according to Claim 5, wherein the RFM variable data comprises:
transaction information variables, network risk variables, and user historical behavior variables.

7. A device for generating risk control rules, comprising:
a set determination unit, for aligning a source domain and a target domain in terms of data structures, to obtain a sample data set, wherein the sample data set comprises source domain sample data and target domain sample data;
a weight determination unit, for carrying out multiple iterations with respect to the sample data set based on a preset convergence threshold, in order to obtain a weight of each sample data in the sample data set;
a characteristic value determination unit, for determining characteristic parameter values in preset risk control rules generation conditions according to the weight of each sample data in the sample data set; and
a rule generation unit, for generating risk control rules according to the preset risk control rules generation conditions and the characteristic parameter values in the preset risk control rules generation conditions.

8. The device according to Claim 7, wherein the set determination unit is specifically used for:
adding variable data with a same variable dimension and/or variable data with a same service logic definition in the source domain and the target domain into the sample data set.

9. The device according to Claim 8, wherein the weight determination unit is specifically used for:
determining a classification model, based on a predetermined algorithm and the sample data set;
carrying out multiple iterations with respect to the sample data set by decreasing the weight of source domain sample data that are misclassified and increasing the weight of target domain sample data that are misclassified, until a classification correction rate of the classification model satisfies the preset convergence value; and
determining a weight of each sample data in the sample data set based on the classification model with the classification correction rate satisfying the preset convergence value.

10. The device according to Claim 9, wherein the characteristic value determination unit is specifically used for:
determining the characteristic parameter values in the preset risk control rules generation conditions by adopting a weighted decision tree algorithm and according to the weight of each sample data in the sample data set.

11. The device according to Claim 8, wherein the variable data are customer relationship management RFM variable data, used for indicating similarity in risk of transaction events.

12. The device according to Claim 11, wherein the RFM variable data comprises:
transaction information variables, network risk variables, and user historical behavior variables.

13. A device for generating risk control rules, comprising:
a memory, used for storing a program;
a processor, for executing the program stored in the memory and specifically executing the following:
aligning a source domain and a target domain in terms of data structures, to obtain a sample data set, wherein the sample data set comprises source domain sample data and target domain sample data;
carrying out multiple iterations with respect to the sample data set based on a preset convergence threshold, in order to obtain a weight of each sample data in the sample data set;
determining characteristic parameter values in preset risk control rules generation conditions according to the weight of each sample data in the sample data set; and
generating risk control rules according to the preset risk control rules generation conditions and the characteristic parameter values in the preset risk control rules generation conditions.

14. A computer-readable storage medium, wherein the computer-readable storage medium stores one or more programs and when the one or more programs are executed by an electronic device comprising a plurality of applications, the electronic device is caused to execute the following methods:
aligning a source domain and a target domain in terms of data structures, to obtain a sample data set, wherein the sample data set comprises source domain sample data and target domain sample data;
carrying out multiple iterations with respect to the sample data set based on a preset convergence threshold, in order to obtain a weight of each sample data in the sample data set;
determining characteristic parameter values in preset risk control rules generation conditions according to the weight of each sample data in the sample data set; and
generating risk control rules according to the preset risk control rules generation conditions and the characteristic parameter values in the preset risk control rules generation conditions.
